# EUROPEAN PATENT SPECIFICATION

(11) **EP 1 815 698 B1**
(45) Date of publication and mention of the grant of the patent: **25.03.2009**
(21) Application number: 05810760.8
(22) Date of filing: 04.11.2005
(51) Int. Cl.: H04W 4/06, H04L 12/18

(54) **NSAPI ALLOCATION FOR MBMS**
NSAPI-ZUTEILUNG FÜR MBMS
ATTRIBUTION DE NSAPI POUR UN SERVICE DE DIFFUSION ET DE MULTIDIFFUSION MULTIMEDIA (MBMS)

(30) Priority: 04.11.2004 US 625087 P; 03.11.2005 US 265906
(43) Date of publication of application: 08.08.2007
(60) Divisional application: 08159425.1
(73) Proprietor: Telefonaktiebolaget LM Ericsson (publ), 164 83 Stockholm (SE)
(72) Inventor: HERRERO VERÓN, Christian, S-240 10 DALBY (SE); PALM, Håkan, S-352 81 Växjö (SE)
(74) Representative: Bratt, Hanna Catharina
(86) International application number: PCT/EP2005/011821
(87) International publication number: WO 2006/048305

(56) References cited:
- EP-A- 1 376 926
- US-B1- 6 717 925
- "Digital cellular telecommunications system (Phase 2+); Mobile Station (MS) - Serving GPRS Support Node (SGSN); Subnetwork Dependent Convergence Protocol (SNDCP) (3GPP TS 44.065 version 6.3.0 Release 6); ETSI TS 144 065" ETSI STANDARDS, EUROPEAN TELECOMMUNICATIONS STANDARDS INSTITUTE, SOPHIA-ANTIPO, FR, vol. 3-CN1, no. V630, September 2004 (2004-09), XP014028335 ISSN: 0000-0001
- "3rd Generation Partnership Project; Technical Specification Group Core Networks; MBMS; CN1 procedure description (Release 6)" 3GPP TR 29.846 6.0.0, September 2004 (2004-09), XP002361970

## Description

### Background

This invention relates generally to wireless networks, and more particularly to Multi-media Broadcast and Multi-cast Service (MBMS) in wireless networks.

The Third Generation Partnership Project (3GPP) provides a globally applicable wireless system specification based on GSM (Global System for Mobile communications) and UMTS (Universal Mobile Telecommunication System). In addition to addressing a wide range of wireless features, 3GPP addresses MBMS. MBMS allows uni-directional point-to-multipoint and point-to-point broadcast and multi-cast data transmissions. When operating as a broadcast service, MBMS enables the transmission of data from a single source entity to all mobile stations in a service area. When operating as a multi-cast service, MBMS enables the transmission of data from a single source entity only to subscribing mobile stations.

Currently, to subscribe to or join a multi-cast service, a mobile station generates and transmits a join message to the network. This join message would trigger a procedure in order to create an MBMS context in both the network and the mobile station. During this procedure the mobile station sends a request message which contains mobile-specific information related to a particular multi-cast service, such as an IP multi-cast address, APN (Access Point Name), a mobile-selected NSAPI (Network layer Service Access Point Identifier), etc. As specified by 3GPP, the NSAPI is used for network layer routing. Originally, the NSAPI was used only to index a PDP (Packet Data Protocol) context. However, later releases of 3GPP allow the NSAPI to also be used to index MBMS contexts. Because the NSAPI value space reserves only 11 NSAPI values that are shared by both PDP and MBMS, mobile stations are prevented from subscribing to more than 11 multi-cast services. It would be desirable to provide a mechanism that enables a mobile station to subscribe to more than 11 simultaneous multi-cast services.

EP 1 376 926 discloses a method of transmitting data between network equipments in a telecommunications network which comprises a radio access network (RAN) defining cells in which user equipments, such as mobile phones, are localized, and a core network linked to this radio access network and adapted to establish a multimedia broadcast multicast context (MBMS) for the user equipments in the cells.

US 6 717 925 discloses a method of operating a mobile communications system supporting data transmission between a mobile station and a network in a number of different packet data protocols (PDPs) including a point-to-multipoint-multicast (PTM-M) protocol.

### Summary

The present invention comprises a method and apparatus for increasing the number of multi-cast services available to a mobile station. To receive multi-cast data associated with a multi-cast service, the mobile station first joins or subscribes to the multi-cast service. During a joining phase, the network and the mobile station exchange information to join the mobile station to a particular multi-cast service identified by an IP multi-cast address. After completing the joining phase, the network enters a data transfer phase. During the data transfer phase, the network establishes a multi-cast communication session for the subscribing mobile station, and transmits multi-cast data to the subscribing mobile station.

According to one exemplary embodiment, the mobile station joins the multi-cast service during the joining phase without allocating a multi-cast service identifier, such as a NSAPI, to the multi-cast service. Instead, the network establishes a multi-cast communication session for a subscribing mobile station and allocates a multi-cast service identifier to the multi-cast communication session during a data transfer phase. During the multi-cast communication session, the network transmits the multi-cast data associated with the identified IP multi-cast address. When the multi-cast communication session ends, the network releases the multi-cast service identifier for later use by a newly established multi-cast communication session. In this embodiment, the mobile station can subscribe to an unlimited number of multi-cast services because the multi-cast service identifiers are not assigned until data is ready to be transferred and are released immediately when the data transfer is complete.

According to another exemplary embodiment, the network includes two non-overlapping service identifier value spaces where the first value space is reserved for packet service identifiers, such as PDP NSAPIs, and the second value space is reserved for multi-cast service identifiers, such as multi-cast NSAPIs. During the joining phase, the network receives a multi-cast service identifier from the mobile station, where the mobile station selects the multi-cast service identifier from the second value space, and assigns the selected multi-cast identifier to the multi-cast service. During the data transmission phase, the network establishes a multi-cast communication session based on the selected multi-cast service identifier, and transmits the corresponding multi-cast data during the established communication session to the subscribing mobile station.

### Brief Description of the Drawings

Figure 1 illustrates an exemplary mobile communication network.
Figure 2 illustrates an exemplary signal diagram for conventional MBMS joining and data transfer phases.
Figure 3 illustrates a conventional NSAPI-IE.
Figure 4 illustrates an exemplary signal diagram for point-to-point MBMS joining and data transfer phases for the lu mode according to the present invention.
Figure 5 illustrates an exemplary NSAPI-IE according to one exemplary embodiment of the present invention.
Figure 6 illustrates an enhanced NSAPI-IE according to another embodiment of the present invention.
Figure 7 illustrates an exemplary signal diagram for point-to-point MBMS joining and data transfer phases for the lu mode according to the present invention.

### Detailed Description

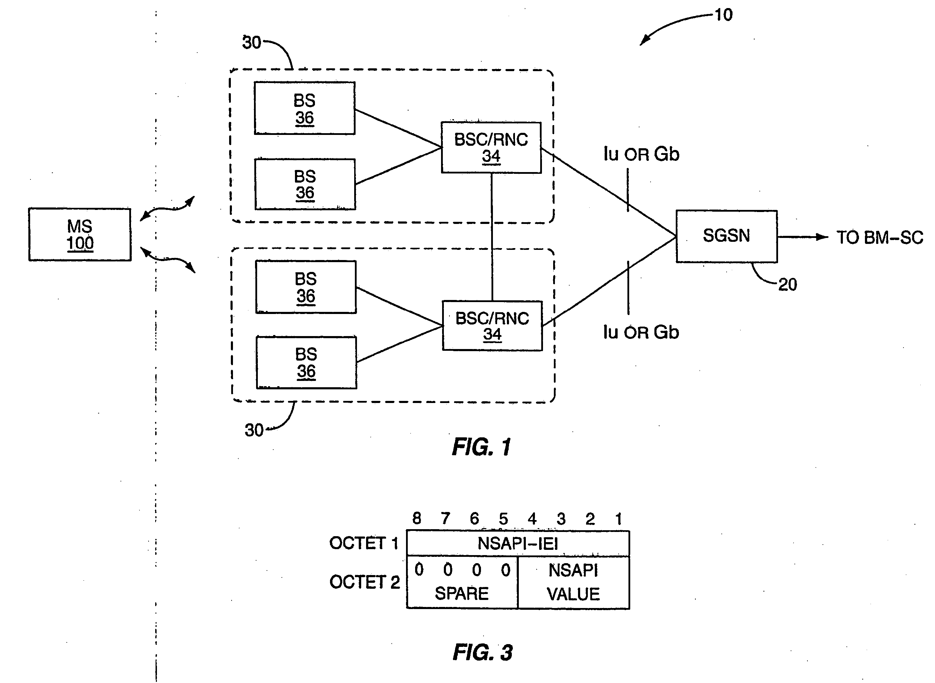

Figure 1 illustrates an exemplary wireless communication network 10 in which the present invention may be implemented. The exemplary network 10 comprises a Wideband Code Division Multiple Access (WCDMA) system as specified by the Third Generation Partnership Project (3GPP). However, those skilled in the art will recognize that the present invention may also be used in mobile communication networks based on other standards, such as cdma2000 (TIA-2000) as specified by 3GPP2.

Wireless communication network 10 comprises at least one Serving GPRS Support Note (SGSN) 20 and at least one Radio Access Network (RAN) 30 for interfacing with one or more mobile stations 100. The SGSN 20 is a core network component that connects to one or more external networks, such as a Packet Data Network (PDN), via a Broadcast/Multi-cast Service Center (BM-SC). In general, an SGSN 20 is responsible for the switching and routing of calls between the mobile stations 100 and the external networks.

RAN 30 operatively connects to an SGSN 20 to provide mobile stations 100 with access to the SGSN 20. The RAN 30 may comprise either a GSM EDGE Radio Access Network (GERAN) or a UMTS Terrestrial Radio Access Network (UTRAN). RAN 30 includes at least one Base Station Controller (BSC) 34 and a plurality of base stations (BSs) 36. The BSC 34 connects RAN 30 to the SGSN 20 and controls most functions of the RAN 30. The interface between the RAN 30 and SGSN 20 is known as the Gb interface for GERAN and as the lu interface for UTRAN. The BSs 36 include the radio equipment for communicating over the air interface with the mobile stations 100. In UTRAN, the BS 36 is referred to as a Node B and the BSC 34 is referred to as a radio network controller (RNC). This application uses the generic terms BS and BSC, instead of the standard-specific terms Node B and RNC.

Multi-media Broadcast and Multi-cast Service (MBMS) is one feature provided by wireless communication network 10 to mobile stations 100. The main purpose of MBMS is to efficiently transmit broadcast and multi-cast data in a wireless communication network 10 to one or more mobile stations 100. MBMS broadcast data is defined as data transmitted from a single source to all mobile stations 100 within a particular area. MBMS multi-cast data is defined as data transmitted from a single source, referenced by an Internet Protocol (IP) multi-cast address, to one or more subscribing mobile stations 100.

MBMS requires the implementation of a subscription phase, also referred to herein as a joining phase, and a data transfer phase. During the joining phase, the mobile station 100 subscribes to a multi-cast service identified by a specific IP multi-cast address. During the data transfer phase, the network 10 establishes a multi-cast session with the subscribing mobile station 100 and transmits multi-cast service data to the subscribing mobile station 100. To better understand the invention described herein, the following first embodiment describes the details of the joining and data transfer phases as conventionally implemented by wireless communication network 10.

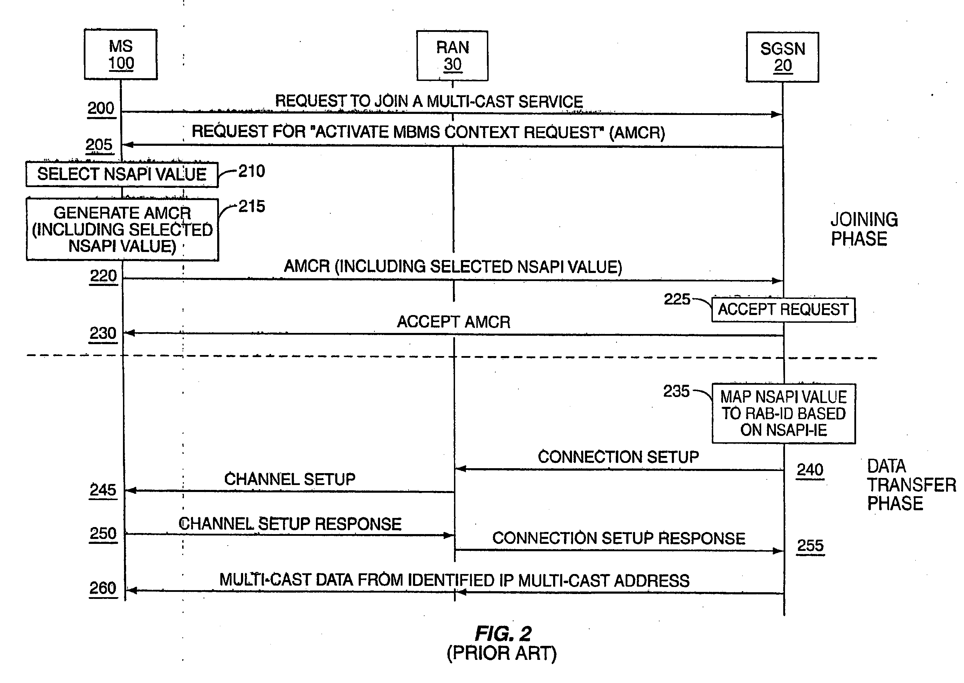

Figure 2 illustrates a signal flow diagram for conventional joining and data transfer phases. The signal diagram of Figure 2 generally applies to point-to-point multi-cast services implemented over an lu interface. It will be appreciated that, with some minor adjustments, the same general procedure also applies to point-to-multipoint multi-cast services implemented over a Gb interface. During the joining phase, mobile station 100 sends a request to join a multi-cast service to the SGSN 20 (step 200). In response, SGSN 20 sends a request to mobile station 100 for an Activate MBMS Context Request (AMCR) (step 205). The mobile station 100 then selects a multi-cast service identifier, denoted in the standard as the Network Service Access Point Identifier (NSAPI) (step 210). After selecting the NSAPI, mobile station 100 generates the AMCR (step 215), where the generated request includes the selected NSAPI and identifies the corresponding IP multi-cast address for the desired multi-cast service. The mobile station 100 transmits the generated AMCR to the SGSN 20 (step 220). In response, SGSN 20 accepts or rejects the request. If SGSN 20 rejects the request, the communication ends; if the mobile station 100 still wishes to join the multi-cast service, the process of steps 200 - 220 must be repeated. However, if SGSN 20 accepts the request (step 225), it sends an accept AMCR message to mobile station 100 (step 230). The acceptance of the AMCR ends the joining phase and the mobile station 100 is now subscribed to the multi-cast service and is able to receive multi-cast.

During the subscription, the MBMS will periodically provide multi-cast data to the subscribing mobile station 100. In order to send multi-cast data to the mobile station 100, the network 10 first establishes a multi-cast session with the mobile station 100. The process of establishing a multi-cast session and the transfer of data to the mobile station 100 takes place in the data transfer phase. During the data transfer phase, SGSN 20 maps the NSAPI previously selected by the subscribing mobile station 100 to a Radio Access Bearer ID (RAB-ID) (step 235) and establishes a multi-cast session with the subscribing mobile station 100 (steps 240 - 255). During the multi-cast session, SGSN 20 sends multi-cast data to the RAN 30, which forwards the multi-cast data to the subscribing mobile station 100 (step 260).

Figure 3 illustrates an exemplary NSAPI information element (IE) that is included by the mobile station 100 in the AMCR according to the prior art. The NSAPI-IE is a type 3 information element with a length of 2 octets. The NSAPI-IEI (NSAPI Information Element Identifier) occupies the first octet. The NSAPI selected by the mobile station 10 at step 210 occupies bits 1 - 4 in the second octet. Bits 5 - 8 of the conventional NSAPI value space are unused spare bits. Because the NSAPI is only four bits in length, only 16 unique NSAPIs are possible in the prior art. Of those 16 possible values, five are reserved so that the mobile station 100 has only 11 possible NSAPIs to select from. Table 1 illustrates the conventional assignment for bits 1 - 4.

**Table 1**

| **Bits** | | | | **Allocation** |
|---|---|---|---|---|
| 4 | 3 | 2 | 1 | |
| 0 | 0 | 0 | 0 | Reserved |
| 0 | 0 | 0 | 1 | MBMS for A/Gb mode |
| 0 | 0 | 1 | 0 | Reserved |
| 0 | 0 | 1 | 1 | Reserved |
| 0 | 1 | 0 | 0 | Reserved |
| 0 | 1 | 0 | 1 | NSAPI 5 for PDP or MBMS |
| 0 | 1 | 1 | 0 | NSAPI 6 for PDP or MBMS |
| 0 | 1 | 1 | 1 | NSAPI 7 for PDP or MBMS |
| 1 | 0 | 0 | 0 | NSAPI 8 for PDP or MBMS |
| 1 | 0 | 0 | 1 | NSAPI 9 for PDP or MBMS |
| 1 | 0 | 1 | 0 | NSAPI 10 for PDP or MBMS |
| 1 | 0 | 1 | 1 | NSAPI 11 for PDP or MBMS |
| 1 | 1 | 0 | 0 | NSAPI 12 for PDP or MBMS |
| 1 | 1 | 0 | 1 | NSAPI 13 for PDP or MBMS |
| 1 | 1 | 1 | 0 | NSAPI 14 for PDP or MBMS |
| 1 | 1 | 1 | 1 | NSAPI 15 for PDP or MBMS |

Users may wish to subscribe to multiple multi-cast services. Because there are only 11 NSAPIs available to identify both PDP and MBMS contexts, the conventional protocol prevents users from subscribing to more than 11 multi-cast services, and realistically limits users to less than 11 multi-cast services. The present invention provides methods for extending the number of simultaneous multi-cast services to which a user may subscribe.

One exemplary embodiment of the present invention, referred to herein as the "extended" embodiment, addresses this problem by removing the NSAPI selection process from the mobile station 100. According to this embodiment, mobile station 100 joins a user-selected multi-cast service without selecting a NSAPI during the joining phase. Instead the network 10 selects a NSAPI during the data transmission phase and establishes a multi-cast communication session using the selected NSAPI. Therefore, according to this exemplary embodiment, the network 10 allocates a different NSAPI to each ongoing multi-cast session, instead of having the mobile station 100 allocate a different NSAPI to each multi-cast service. In this embodiment, the NSAPI is released when the multicast session ends and can be reused for subsequent multicast sessions. Further, this embodiment employs an extended NSAPI that allows up to 16 simultaneous multi-cast sessions. The mobile station 100 may, however, subscribe to an unlimited number of multi-cast services.

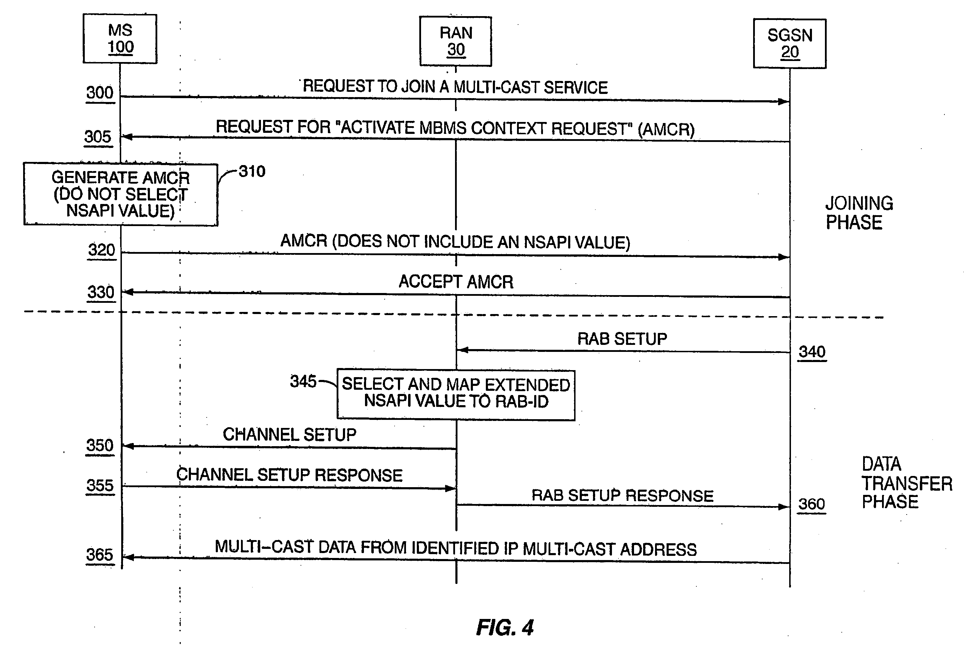

Figure 4 illustrates a signal flow diagram for point-to-point multi-cast services provided over an lu interface according to the extended embodiment. Steps 300 and 305 correspond to steps 200 and 205 of Figure 2. After mobile station 100 receives the request for the AMCR from SGSN 20 (step 305), the mobile station 100 generates the AMCR without selecting a NSAPI (step 310). As a result, while the generated AMCR includes such information as the IP multi-cast address, the Access Point Name (APN), MBMS protocol configuration options, etc., the AMCR sent to SGSN 20 (step 320) does not include a NSAPI. If SGSN 20 accepts the AMCR, SGSN 20 sends an accept message to mobile station 100 (step 330) to complete the joining phase.

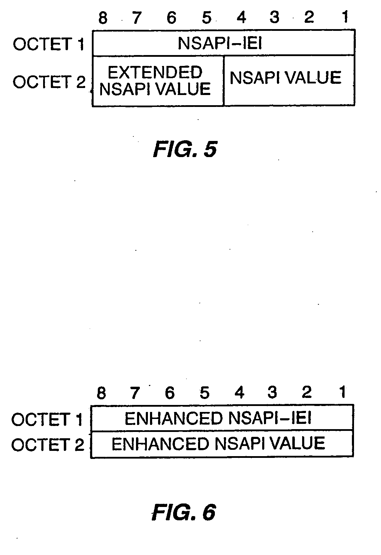

During the data transfer phase, SGSN 20 initiates a multi-cast session with the mobile station 100. The SGSN 20 sends a request to RAN 30 to setup a Radio Access Bearer (RAB) for the multi-cast session. RAN 30 selects the NSAPI from an extended NSAPI value space, illustrated in Figure 5, and maps the selected NSAPI to the RAB-ID (Radio Access Bearer IDentity) (step 345). RAN 30 provides the RAB-ID to the mobile station 100 as part of the channel setup procedure (step 350). By completing the channel and RAB setup procedures (steps 355, 360), the network 10 establishes a multi-cast communication session for subscribing mobile station 100. During the multi-cast communication session, SGSN 20 transmits multi-cast data associated with the IP multi-cast address provided by the BM-SC to the subscribing mobile station 100.(step 365). After the data transmission is complete, the multi-cast session is terminated and the assigned NSAPI is released.

As discussed above, RAN 30 selects the NSAPI from an extended NSAPI value space defined by the NSAPI-IE, as shown in Figure 5. According to the extended embodiment, the lower four bits, bits 1 - 4, of the second octet of the NSAPI-IE are allocated as defined above in Table 1, where values 5 - 15 are now defined for PDP only. However, the upper four bits, bits 5 - 8, are defined as the extended NSAPI value space, and define NSAPIs for MBMS only. Table 2 illustrates the assignment for bits 5 - 8 of the extended NSAPI value space.

**Table 2**

| **Bits** | | | | **Allocation** |
|---|---|---|---|---|
| 8 | 7 | 6 | 5 | |
| 0 | 0 | 0 | 0 | NSAPI 0 for MBMS |
| 0 | 0 | 0 | 1 | NSAPI 1 for MBMS |
| 0 | 0 | 1 | 0 | NSAPI 2 for MBMS |
| 0 | 0 | 1 | 1 | NSAPI 3 for MBMS |
| 0 | 1 | 0 | 0 | NSAPI 4 for MBMS |
| 0 | 1 | 0 | 1 | NSAPI 5 for MBMS |
| 0 | 1 | 1 | 0 | NSAPI 6 for MBMS |
| 0 | 1 | 1 | 1 | NSAPI 7 for MBMS |
| 1 | 0 | 0 | 0 | NSAPI 8 for MBMS |
| 1 | 0 | 0 | 1 | NSAPI 9 for MBMS |
| 1 | 0 | 1 | 0 | NSAPI 10 for MBMS |
| 1 | 0 | 1 | 1 | NSAPI 11 for MBMS |
| 1 | 1 | 0 | 0 | NSAPI 12 for MBMS |
| 1 | 1 | 0 | 1 | NSAPI 13 for MBMS |
| 1 | 1 | 1 | 0 | NSAPI 14 for MBMS |
| 1 | 1 | 1 | 1 | NSAPI 15 for MBMS |

When network 10 is setting up a multi-cast communication session for a point-to-point service over the lu interface, RAN 30 sets the lower bits, bits 1 - 4, to 0001 and selects a 4-bit NSAPI from the extended NSAPI value space to generate the full, 8-bit NSAPI. As such, the 8-bit NSAPI according to the extended embodiment comprises a fixed portion (bits 1 - 4) and a variable portion (bits 5 - 8). Due to this implementation, the extended embodiment provides 16 NSAPIs exclusively for 16 simultaneous multi-cast sessions, while maintaining the original 11 NSAPIs allocated by bits 1 - 4 exclusively for PDP.

A similar procedure also applies to point-to-multipoint multi-cast services transmitted over a Gb interface. For this case, the joining phase for the point-to-multipoint multi-cast services is identical to that for point-to-point multi-cast services shown in Figure 4. However, during the data transfer phase, SGSN 20 sets the conventional NSAPI to 1, which identifies a multi-cast service for Gb mode, as show in Table 1.

The extended embodiment has several advantages over multi-cast services offered by conventional MBMS. First, because the mobile station 100 does not allocate a specific NSAPI to a specific multi-cast service during the joining phase, the mobile station 100 can subscribe to an unlimited number of multi-cast services. Further, because network 10 allocates a specific NSAPI to a specific multi-cast session, instead of to a specific multi-cast service, each NSAPI is released at the conclusion of the multi-cast communication session. Therefore, the extended embodiment enables the network 10 to reuse NSAPIs for different multi-cast sessions that do not overlap in time. Further still, because values 0 - 15, as defined by bits 5 - 8 of the NSAPI value space are reserved for MBMS, and because values 5 - 15, as defined by bits 1 - 4, are reserved for PDP, the extended embodiment eliminates any conflicts between NSAPI allocation for MBMS services (allocated by the RAN 30) and PDP services (allocated by the mobile station 100). This simplifies the implementation of the mobile stations supporting the establishment and release of RABs for multiple MBMS and PDP services in parallel.

According to another exemplary embodiment, referred to herein as the "enhanced" embodiment, mobile station 100 selects an enhanced NSAPI for the multi-cast service as part of the joining phase. As discussed further below, the mobile station 100 selects this enhanced NSAPI from an enhanced NSAPI-IE that is separate from the conventional NSAPI-IE. After establishing a multi-cast communication session based on the selected enhanced NSAPI, network 10 transmits the multi-cast data to mobile station 100 during the established communication session.

Figure 6 illustrates the enhanced NSAPI-IE. The enhanced NSAPI-IE includes an enhanced NSAPI-IEI in the first octet and an 8-bit enhanced NSAPI value space in the second octet. As shown in Table 3, the enhanced NSAPI uses all 8 bits in the second octet of the NSAPI-IE, where values 0 - 127 are reserved, and values 128 - 255 are used to identify an MBMS context for point-to-point multi-cast services over the lu interface. Thus, the enhanced NSAPI-IE provides up to 128 different NSAPIs to enable the mobile station 100 to join up to 128 different multi-cast services.

**Table 3**

| **8-bit NSAPI** | **Allocation** |
|---|---|
| 00000000-01111111 | Reserved |
| 10000000 - 11111111 | NSAPI 128 - 255 for MBMS |

Because the network now includes an enhanced NSAPI-IE that is separate from the conventional NSAPI-IE, and because PDP NSAPIs are selected from the value space provided by the conventional NSAPI-IE, the enhanced embodiment provides non-overlapping MBMS and PDP NSAPI value spaces, which prevents MBMS and PDP services from having to share NSAPIs. Further, because the MBMS and PDP NSAPI value spaces do not overlap, there is no risk of the mobile station 100 allocating the same NSAPI value to a PDP context and to an MBMS context.

In addition, the MBMS value space is larger than the PDP value space, which enables mobile station 100 to subscribe to a larger number of multi-cast services. In the exemplary embodiment the enhanced NSAPI value space allocates 128 different NSAPIs for multi-cast services. As a result, a mobile station 100 may subscribe to up to 128 different multi-cast services at a time, a significant improvement over the 11 allowed by the conventional system. Those skilled in the art, however, will appreciate that the enhanced NSAPI value space may allocate additional NSAPIs for MBMS, such as any or all of values 16 - 127, currently shown in Table 3 as reserved, as long as the NSAPI values allocated for MBMS do not overlap the NSAPI values allocated for PDP.

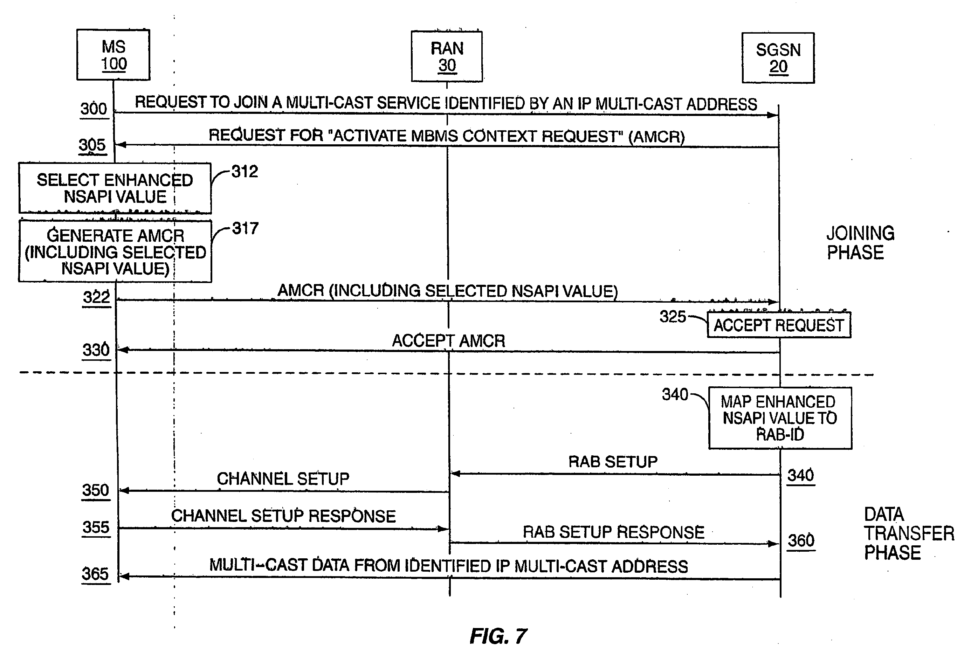

Figure 7 illustrates an exemplary signal flow diagram for the enhanced embodiment. In Figure 7, steps identified by step numbers used in Figure 4 are identical to the steps of Figure 4. After mobile station 100 receives the request for the AMCR from SGSN 20 (step 305), the mobile station 100 selects an enhanced NSAPI from the MBMS enhanced NSAPI value space (step 312) and generates the AMCR (step 317). By selecting the enhanced NSAPI, mobile station 100 allocates the selected NSAPI to a particular multi-cast service for as long as the mobile station 100 maintains the subscription to the multi-cast service. After generating the AMCR, which includes the selected enhanced NSAPI, mobile station 100 sends the AMCR to SGSN 20 (step 322). If SGSN 20 accepts the request (step 325), the SGSN 20 sends an accept message to mobile station 100 (step 330) to complete the joining phase.

During the data transfer phase, SGSN 20 establishes a multi-cast session with the mobile station 100. The SGSN 20 maps the enhanced NSAPI to a RAB-ID (step 337), and establishes a multi-cast communication session with mobile station 100 (steps 340 - 360). During the multi-cast communication session, SGSN 20 transmits multi-cast data associated with the IP multi-cast address to mobile station 100 (step 365).

The enhanced embodiment has several advantages over conventional MBMS. First, the enhanced embodiment provides n different NSAPIs, i.e., 128 different NSAPIs, four multi-cast services defined by MBMS. Further, the n different NSAPIs enable mobile station 100 to subscribe to up to n different multi-cast services. Further still, because the MBMS NSAPIs no longer intersects or overlaps the PDP NSAPIs, the enhanced embodiment eliminates any conflicts between NSAPI allocation for MBMS and PDP services.

The above describes the invention using terms specific to 3GPP, such as MBMS, NSAPI, RAB-ID, etc. However, it will be appreciated that the present invention applies to any wireless communication system that uses multi-cast identifiers, i.e., NSAPIs, and/or connection identifiers, i.e., RAB-IDs, as part of a process for subscribing to and/or receiving data from a multi-cast service.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A method of transmitting multi-cast data associated with a multi-cast service from a wireless network to a mobile station (100) in the wireless network, the method
**characterised by** :
reserving a first value space for packet service identifiers and a second non-overlapping value space for multi-cast service identifiers;
receiving a multi-cast service identifier from the mobile station (100), wherein the received multi-cast service identifier is selected by the mobile station (100) from the second value space for the multi-cast service during a joining phase;
establishing a multi-cast communication session for the mobile station (100) based on the selected multi-cast service identifier during a data transmission phase; and
transmitting the multi-cast data from the wireless network to the mobile station (100) during the established multi-cast communication session.

2. The method of claim 1 wherein the first value space comprises a first range of values, and wherein the second value space comprises a second range of values, different from the first range of values.

3. The method of claim 2 wherein the first range of values includes values ranging between 5 and 15, and wherein the second range of values includes values ranging between 128 and 255.

4. The method of claim 1 further comprising ending the multi-cast communication session and reserving the allocated multi-cast service identifier for a later multi-cast communication session associated with the same multi-cast service.

5. The method of claim 1 wherein the multi-cast service identifier comprises a Network layer Service Access Point Identifier, NSAPI.

6. The method of claim 1 further comprising mapping the multi-cast service identifier to a connection identifier during the data transmission phase.

7. The method of claim 1 wherein the multi-cast communication session comprises a point-to-point multi-cast communication session.

8. A wireless network configured to transmit multi-cast data associated with a multi-cast service to a mobile station (100), the wireless network (10) comprising:
a radio access network (30) configured to communicate with the mobile station (100) over a wireless interface; and
a core network operatively connected to the radio access network,
**characterised in that** the core network is configured to:
reserve a first value space for packet service identifiers and a second non-overlapping value space for multi-cast service identifiers;
during a joining phase, receive a multi-cast service identifier selected by the mobile station (100) from the second value space for the multi-cast service;
establish a multi-cast communication session for the mobile station (100) based on the selected multi-cast service identifier during a data transmission phase; and
transmit the multi-cast data to the mobile station (100) during the established multi-cast communication session.

## Patentansprüche

1. Ein Verfahren zum Übertragen von Multicast-Daten, die zugeordnet sind zu einem Multicast-Service, von einem drahtlosen Netzwerk an einer Mobilstation (100) in dem drahtlosen Netzwerk, das Verfahren
**gekennzeichnet durch**:
Reservieren eines ersten Werteraums für Paketservice-Identifizierer und eines zweiten nicht überlappenden Werteraums für Multicast-Service-Identifizierer;
Empfangen eines Multicast-Service-Identifizierers von einer Mobilstation (100), wobei der empfangene Multicast-Service-Identifizierer ausgewählt wird **durch** die Mobilstation (100) von dem zweiten Werteraum für den Multicast-Service während einer Beitrittsphase;
Einrichten einer Multicast-Kommunikationssession für die Mobilstation (100), basierend auf dem ausgewählten Multicast-Service-Identifizierer während einer Datenübertragungsphase; und
Übertragen der Multicast-Daten von dem drahtlosen Netzwerk an die Mobilstation (100) während der eingerichteten Multicast-Kommunikationssession.

2. Das Verfahren nach Anspruch 1, wobei der erste Werteraum einen ersten Wertebereich umfasst, und wobei der zweite Werteraum einen zweiten Wertebereich umfasst, der unterschiedlich von dem ersten Wertebereich ist.

3. Das Verfahren nach Anspruch 2, wobei der erste Wertebereich Werte enthält, die zwischen 5 und 15 liegen, und wobei der zweiten Wertebereich Werte enthält, die zwischen 128 und 255 liegen.

4. Das Verfahren nach Anspruch 1, ferner umfassend ein Beenden der Multicast-Kommunikationssession und Reservieren des in Zusammenhang stehenden Multicast-Service-Identifizierers für eine spätere Multicast-Kommunikationssession, die in Zusammenhang steht mit dem gleichen Multicast-Service.

5. Das Verfahren nach Anspruch 1, wobei der Multicast-Service-Identifizierer einen Netzwerkschicht-Servicezugangspunkt-Identifizierer, NSAPI (Network layer Service Access Point Identifier), umfasst.

6. Das Verfahren nach Anspruch 1, ferner umfassend ein Abbilden des Multicast-Service-Identifizierers auf einen Verbindungsidentifizierer während der Datenübertragungsphase.

7. Das Verfahren nach Anspruch 1, wobei die Multicast-Kommunikationssession eine Punkt-zu-Punkt-Multicast-Kommunikationssession umfasst.

8. Ein drahtloses Netzwerk, konfiguriert zum Übertragen von Multicast-Daten, die in Zusammenhang stehen mit einem Multicast-Service, an eine Mobilstation (100), wobei das drahtlose Netzwerk (10) umfasst:
ein Funkzugangsnetzwerk (30), konfiguriert zum Kommunizieren mit der Mobilstation (100) über eine drahtlose Schnittstelle; und
ein Kernnetzwerk, das betriebsfähig verbunden ist mit dem Funkzugangsnetzwerk,
**dadurch gekennzeichnet, dass** das Kernnetzwerk konfiguriert ist zum:
Reservieren eines ersten Werteraums für Paketservice-Identifizierer und eines zweiten nicht überlappenden Werteraums für Multicast-Service-Identifizierer;
während einer Beitrittsphase, Empfangen eines Multicast-Service-Identifizierers, der durch die Mobilstation (100) ausgewählt wird aus dem zweiten Werteraum für den Multicast-Service;
Einrichten einer Multicast-Kommunikationssession für die Mobilstation (100), basierend auf dem ausgewählten Multicast-Service-Identifizierer während einer Datenübertragungsphase; und
Übertragen der Multicast-Daten an die Mobilstation (100) während der eingerichteten Multicast-Kommunikationssession.

## Revendications

1. Procédé de transmission de données de multidiffusion associées à un service de multidiffusion d'un réseau sans fil à une station mobile (100) dans le réseau sans fil, le procédé étant **caractérisé par** :
la mise en réserve d'un espace de premières valeurs pour des identifiants de service par paquets et d'un espace de secondes valeurs non chevauchant pour des identifiants de service de multidiffusion ;
la réception d'un identifiant de service de multidiffusion depuis la station mobile (100), l'identifiant de service de multidiffusion reçu étant sélectionné par la station mobile (100) d'après l'espace de secondes valeurs pour le service de multidiffusion pendant une phase de jonction ;
l'établissement d'une session de communication de multidiffusion pour la station mobile (100) basée sur l'identifiant de service de multidiffusion sélectionné durant une phase de transmission de données ; et
la transmission des données de multidiffusion du réseau sans fil à la station mobile (100) pendant la session de communication de multidiffusion établie.

2. Procédé selon la revendication 1, dans lequel l'espace de premières valeurs comprend une première plage de valeurs, et dans lequel l'espace de secondes valeurs comprend une seconde plage de valeurs, différente de la première plage de valeurs.

3. Procédé selon la revendication 2, dans lequel la première plage de valeurs comprend des valeurs allant de 5 à 15, et dans lequel la seconde plage de valeurs comprend des valeurs allant de 128 à 255.

4. Procédé selon la revendication 1, comprenant en outre la cessation de la session de communication de multidiffusion et la mise en réserve de l'identifiant de service de multidiffusion alloué pour une session ultérieure de communication de multidiffusion associée au même service de multidiffusion.

5. Procédé selon la revendication 1, dans lequel l'identifiant de service de multidiffusion comprend un identifiant de point d'accès à un service de couche de réseau, NSAPI (pour "Network layer Service Access Point Identifier").

6. Procédé selon la revendication 1, comprenant en outre l'application de l'identifiant de service de multidiffusion à un identifiant de connexion pendant la phase de transmission de données.

7. Procédé selon la revendication 1, dans lequel la session de communication de multidiffusion comprend une session de communication de multidiffusion point-à-point.

8. Réseau sans fil configuré pour transmettre des données de multidiffusion associées à un service de multidiffusion à une station mobile (100), le réseau sans fil (10) comportant :
un réseau d'accès radio (30) configuré pour communiquer avec la station mobile (100) par une interface sans fil ; et
un réseau central connecté fonctionnellement au réseau d'accès radio,
**caractérisé en ce que** le réseau central est configuré pour :
réserver un espace de premières valeurs pour des identifiants de service par paquets et un espace de secondes valeurs non chevauchant pour des identifiants de service de multidiffusion ;
pendant une phase de jonction, à recevoir un identifiant de service de multidiffusion sélectionné par la station mobile (100) à partir de l'espace de secondes valeurs pour le service de multidiffusion ;
à établir une session de communication de multidiffusion pour la station mobile (100) basée sur l'identifiant de service de multidiffusion sélectionné pendant une phase de transmission de données ; et
à transmettre les données de multidiffusion à la station mobile (100) pendant la session de communication de multidiffusion établie.
